Berichtigte Fassung Amended version Version rectifiée

(19) Europäisches Patentamt
European Patent Office
Office européen des brevets

(11) Publication number: 0 015 157 A1

(12) # EUROPEAN PATENT APPLICATION

(21) Application number: 80300533.9

(22) Date of filing: 25.02.80

(51) Int. Cl.³: C 02 F 1/22
B 01 D 9/04

(30) Priority: 26.02.79 US 15343

(43) Date of publication of application: 03.09.80 Bulletin 80/18

(84) Designated Contracting States: AT BE CH DE FR GB IT LU NL SE

(71) Applicant: Cheng, Sing-Wang
4th Floor, No.1, Lane 479
Fu-Hsing N.Road Taipei(TW)

(71) Applicant Cheng, Chen-Yen
9605 La Playa Street, NE.
Albuquerque New Mexico, 87111(US)

(71) Applicant: Cheng, Wu-Cheng
9605 La Playa Street, NE.
Albuquerque New Mexico, 87111,(US)

(72) Inventor: Cheng, Chen-Yen
9605 La Playa Street, NE.
Albuquerque New Mexico, 87111(US)

(72) Inventor: Cheng, Sing-Wang
4th Floor, No.1, Lane 479
Fu-Hsing N.Road Taipei(TW)

(72) Inventor: Cheng, Wu-Cheng
9605 La Playa Street, NE.
Albuquerque New Mexico, 87111,(US)

(74) Representative. Wells, Keith Raymond
POTTS, KERR & CO. 15 Hamilton Square
Birkenhead Merseyside L41 6BR(GB)

(54) **Process and apparatus for separating at least one component from an aqueous mixture.**

(57) In the process of the present invention an aqueous solution is flash vaporized under a reduced pressure to form, simultaneously, a low pressure water vapour and ice crystals. The ice formed may, if desired, be purified and is then melted inside thermally conductive conduits under a high pressure of, for example, 600 atm. The low pressure water vapour is desublimed to form ice on the exterior of the conduits The latent heat of desublimation released may be utilized in supplying the heat needed in the ice-melting operation. The desublimate is removed intermittently by an in-situ dissolution operation utilizing an aqueous solution such as the feed solution. A substantially equivalent amount of ice is formed inside the conduits by an exchange freezing operation. The ice so formed is also melted.

An apparatus is provided for carrying out such a process

EP 0 015 157 A1

PROCESS AND APPARATUS FOR SEPARATING AT LEAST ONE COMPONENT FROM AN AQUEOUS MIXTURE

The present invention relates to a process and to an apparatus which can be used for separating water from aqueous solutions and, if desired, for recovering such water. The process and apparatus find an application in the desalination of brackish water and sea water and in concentrating aqueous solutions in an industrial environment.

The process of the present invention is, essentially, a vacuum freezing process. The main difficulties in conventional vacuum freezing processes are encountered in forming low pressure water vapour in a vacuum freezing zone, removing such water vapour from the zone and the manner in which the vapour is converted into a liquid state.

Several vacuum freezing processes are already known. Probably the best known of these processes are (1) the Vacuum-Freezing Vapor-Compression (VEVC) Process developed by Colt Industries, (2) the Vacuum-Freezing Vapor Absorption (VFVA) Process developed by Carrier Corporation, (3) the Vacuum-Freezing Ejector-Absorption (VFEA) Process developed by Colt Industries, (4) the Vacuum-Freezing Solid-Condensation (VFSC) Process developed in the Catholic University of America and (5) the Vacuum-Freezing High Pressure Ice-Melting (VFPIM) Process developed by Chen-yen Cheng and Sing-Wang-Cheng. The process of the present invention is an improved form of the Vacuum-Freezing High Pressure Ice-Melting Process.

In all of these vacuum freezing processes, an aqueous solution is introduced into a chamber which is maintained at a pressure somewhat lower than the vapour pressure of the solution at its freezing temperature. By so doing, water simultaneously flash vaporizes and forms ice crystals. As a result of this operation, a low pressure water vapour and an ice-mother liquor slurry are formed. In case of sea water desalination, the pressure is around 3.5 Torr. The low pressure water vapour thus formed then has to be removed and transformed into a condensed state whilst the ice crystals have to be separated from the mother-liquor and the resulting

purified ice has to be melted to yield fresh water. Furthermore, the heat released in transforming the vapour into a condensed state should be utilized in supplying the heat needed to melt the ice. The above-described processes utilize different methods of vapour removal, different methods of converting the vapour into a condensate and different methods of attaining the heat reuse.

The Vacuum-Freezing Vapor-Compression Process is described in the Office of Saline Water, Research and Development Report No. 295. In such process, the low pressure water vapour is compressed to a pressure higher than the triple point pressure of water (4.58 Torr) and is then brought in direct contact with purified ice. This causes simultaneous condensation of the water vapour and melting of the ice. The main disadvantages of this process are that a special compressor is required to compress the low pressure water. Such compressor cannot be operated reliably and its efficiency is low.

The Vacuum-Freezing Vapor Absorption Process was developed by Carrier Corporation until 1964, but has since been discontinued. The process is described in the Office of Saline Water, Research and Development Report No. 113. In such process, the low pressure water vapour is absorbed by a concentrated lithium bromide solution. The diluted solution thus formed is reconcentrated by evaporation and the water vapour produced by such evaporation is condensed to yield fresh water. The heat of absorption is removed by recycling a water stream past a heat transfer surface. The recycled water stream is then used to melt the ice crystals.

The Vacuum-Freezing Ejector-Absorption Process was also developed by Colt Industries and is described in the Office of Saline Water, Research and Development Report No. 744. In this process, part of the low pressure water vapour obtained in the freezing step is compressed by a combination of a steam ejector and an absorber loop. A concentrated sodium hydroxide solution is used to absorb a part of the low pressure vapour. The diluted sodium hydroxide solution thus formed is boiled to form water vapour at 300 Torr and to cause regeneration of

in such a manner as to change direction longitudinally from location to location not only serves to ensure good engagement of the reinforcing network on the asphalt but also to ensure that the shear forces exerted by the network membrane on the envisaged reinforced layer are at a maximum so that, for example, laterial creep of an asphalt layer is couteracted. Additionally, it ensures that a reinforcing element subjected to loading transmits the forces in its consecutive longitudinal sections to the mineral particles of the layer in ever changing directions, so that the force-distributing effect is intensified.

For application with the invention, the reinforcing elements described for uni-dimensional use in French specification 331,848 may be considered, such elements having, for example, the form of an at least locally twisted band or strip of metal, e.g. stainless steel or steel which has been corrosion-treated. The width of such a strip may be selected according to the particlesize of the gravel used, whereas the fact that the orientation of the cross-section is continually changing, not only ensures good engagement with the surrounding material but, in addition, an ever-changing direction of transmission of forces to the mineral particles. The adherence to the intersecting reinforcing elements results in the said membrane effect inter alia. A reinforcing element of this kind, which can be regarded as a special product of the invention, has sufficient flexibility locally for taking loading forces and transmits forces in such a manner, for example, to the mineral particles of the asphalt, that the latter, due also to the action of other such reinforcing elements, is unable to shift with respect to the reinforcing elements, and therefore will not show creep.

According to the invention, a good connection between the elements is facilitated if the outer surfaces of two intersecting reinforcing elements, facing one another where they intersect, substantially coicide. When the aforementioned twisted metal strips are used as reinforcing elements, it is recommendable, according to the invention,

that one of two intersecting reinforcing elements is twisted clockwise and the other one counter-clockwise, respectively.

In many cases, according to the invention, at least two reinforcing networks are embedded in the layer substantially directly above one another with a relative offset of substantially half the mesh dimension in the main directions. This produces the effect that the normal loading forces of the layer, where they engage inbetween two reinforcing elements of the network, find a longitudinal element of the other network so that not only distribution of the normally directed loading forces over a multiple of reinforcing networks, each with its own membrane effect, is obtained but that in addition, and to a greater degree than by the presence at some distance of two reinforcing elements of one and the same network, the mineral particles are prevented from being displaced within the layer. Such particles situated between two reinforcing elements of one and the same network in many instances transmit a force to a reinforcing element of the other network which, in turn, then will act as a membrane. These particles which are, as it were, "captivated" by the two reinforcing networks above one another experience equal loading in all directions. This resembles a hydrostatic condition in which the resultant force on each particle is substantially zero, so that the particles experience minimum displacement forces and that no material creep occurs.

The invention will be elucidated in the following description with reference to the accompanying drawing wherein:

Fig. 1 is a diagrammatic vertical cross-section in the direction of travel through a portion of road surfacing constructed in the form of a reinforced asphalt layer according to the invention and subjected to loading by a motor vehicle tyre.

Fig. 2 is a diagrammatic perspective of a partially exploded view of the road shown in Fig. 1.

Fig. 3 is a top plan view of a pair of reinforcing networks which are arranged in a staggered relationship to

being formed in the interior of the enclosure externally of the first zone, a plurality of high pressure thermally conductive conduits or tubes being provided in each compartment so as to define a second zone in the conduits or tubes in which ice is alternately melted under a high pressure and formed under a low pressure, and a third zone externally of said conduits or tubes but within said compartment in which, alternately low pressure water vapour is desublimed and the desublimate is dissolved, valve means being provided in each compartment which, in a first position, permit the admittance of low pressure vapour from the first zone into the compartment and, in a second position, isolate the compartment from the first zone, the valve means being open and the tubes being pressurized whilst vapour desublimation and high pressure ice melting are simultaneously effected in the third and second zones of a compartment, the valve means being closed and the tubes being depressurized whilst desublimate dissolution and ice formation are simultaneously effected in the third and second zones of a compartment respectively.

It will therefore be seen that the process of the present invention does not require (a) pressurization of the low pressure vapour, (b) the use of a very concentrated absorbing solution, such as lithium bromide or sodium hydroxide solution or (c) a mechanical removal of a desublimate layer.

The process of the present invention is, it is believed, differentiated from known processes in several ways. Firstly, the manner in which the low pressure water vapour formed in the vacuum freezing zone is removed from the zone, appears to be novel as is the manner in which the vapour is converted into a liquid state. In a highly desirable embodiment, the heat released in converting the vapour into a condensed state is utilized to melt ice formed during the process.

In summary, the process of the present invention comprises a vacuum freezing step (Step 1), an optional ice washing step (Step 2), simultaneous vapour desublimation and high pressure ice melting steps (Step 3), and simultaneous

desublimate dissolution and exchange ice formation steps (Step 4).

During Step 1, an aqueous solution is flash vaporized in a first zone under a reduced pressure to form a low pressure water vapour and ice, the ice possibly being admixed with a mother liquor. During Step 2, the ice is separated from the mother liquor and purified in a counter-washer. During Step 3, both the purified ice obtained in Step 2 and once the process is under way, the ice obtained in Step 4 are melted inside thermally conductive tubes or conduits, that is to say, in a second zone, under a high pressure and the low pressure water vapour obtained in Step 1 is transformed into a desublimate (ice) which is formed as a thin layer on the exterior of each tube or conduit, the exterior of the tubes or conduits forming a third zone. The latent heat released in the desublimation of the water vapour is absorbed by the melting of ice. During Step 4, the interior of the conduits or tubes are depressurized and an aqueous solution, such as the feed solution or the product solution, is brought in contact with the desublimate layer. Heat flows from the second zone to the third zone. The desublimate then dissolves in the aqueous solution, and a substantially equivalent amount of ice is formed in the tubes or conduits. In this way, the desublimate layer is removed in a simple, non-mechanical manner. The ice formed in the second zone during Step 4 provides an additional heat removing capacity which can be used to balance the latent heat of vaporization released in the desublimation of water vapour and the latent heat absorbed in the high pressure melting of ice during Step 3.

The invention will be further described, by way of example, with reference to the accompanying drawings, in which:

Figure 1 shows a flow sheet for the process of the present invention;

Figure 2 schematically shows a phase diagram for pure water and for aqueous solutions on which are shown the operational parameters for carrying out certain steps of the process;

Figure 3 shows, schematically, physical changes which occur during one of the steps of the process,

Figure 4 schematically shows a binary phase diagram in which are illustrated the operational parameters for a further step in the process;

Figure 5 shows, schematically, physical changes which occur during one of the steps of the process, and

Figure 6 shows, in section, an apparatus in accordance with the present invention.

Figure 1 shows a flow diagram of the vacuum freezing high pressure ice melting process of the present invention. As shown in this figure, the process comprises four major steps which will now be described in more detail.

Step 1. Vacuum Freezing Operation

During this step, a deaerated and precooled aqueous solution (solution A) is flash vaporized under a pressure which is sufficiently low to cause simultaneous freezing of the solution. As a result, the solution is converted into a low pressure water vapour and an ice-mother liquor slurry. In this step, water serves as the primary refrigerant to remove the latent heat of fusion. This step may therefore also be referred to as a primary evaporative freezing operation.

Step 2. Ice Washing Operation

The ice-mother liquor slurry obtained in Step 1 is then treated to separate the ice crystals from the mother liquor. The ice crystals are washed using a fresh water stream. There is thus obtained a purified ice mass and a concentrated aqueous solution. Heat exchange may then be effected between the concentrated solution and the feed solution, whereupon the concentrated solution is discharged as a product stream. Alternatively, the concentrated solution may be retained to be used as a dissolving solution later in the process. The purified ice is melted in Step 3 described hereinafter. In order to facilitate transportation of the ice to a treatment zone wherein it is melted, a liquid may be added thereto

and the mixture agitated to form an ice-liquid slurry. It is very convenient to use water as the slurry-forming liquid. However, a water insoluble liquid may also be used.

Step 3. Vapour Desublimation and High Pressure Ice Melting Operation

The low pressure water vapour obtained in Step 1 and the ice formed in Step 2 are then simultaneously conducted to, respectively, the interior and exterior of thermally conductive conduits. The ice is caused to melt under high pressure and, simultaneously, the water vapour is caused to desublime. Thus, fresh water is formed inside the conduits and a desublimate (ice) deposit is formed on the exterior of the conduits.

Step 4. In-Situ Desublimate Dissolution and Exchange Ice Formation Operations

During this step, an aqueous dissolving solution (Solution B), such as the concentrated solution formed in Step 2, is brought into contact with the desublimate mass and the conduits are depressurized. The Solution B dissolves the desublimate to form a solution referred to as Solution C and about an equivalent amount of ice is formed in the interior of the conduits. An aqueous solution of a proper freezing temperature may be used as the dissolving solution. However, it is more convenient either to use the feed solution itself or as already mentioned, the concentrate obtained in Step 2. In the former case, Solution C when formed is simply a diluted feed solution and is recycled to Step 1 where it is used as Solution A. In the latter case, feed solution continues to be used as Solution A in Step 1 and Solution C becomes a product stream.

It should be noted that, as the result of the in-situ desublimate dissolution operation, the desublimate is not recovered as product water. Therefore, only 7.5 lbs of product water is obtained per pound of water evaporated, rather than 8.5 lbs. Although this loss is undesirable, the simplifications which such process permits in the apparatus and the operation thereof provide adequate compensation.

The above-described four operational steps and some

auxiliary treatment steps will now be explained.

1. Vacuum Freezing Operation

The vacuum freezing operation may be best explained with reference to the phase diagram shown in Fig. 2. In this figure, there is shown the triple point of water 1, the vaporization line of water 1-2, the melting line of water 1-3, the sublimation line of water 1-4, the vaporization line of a first solution 5-6, the vaporization line of a second solution 7-8, the S-L-V three phase point of the first solution 5, and the S-L-V three phase point of the second solution 7. The triple point 1 of a pure substance is, of course, the pressure and temperature at which the substance can simultaneously coexist as a liquid, vapour, and solid. The S-L-V three phase point 5 or 7 for a saline solution is the pressure and temperature at which the solution coexists with ice and water vapour, the values of pressure and temperature being dependent upon the concentration of the solution. The triple point of pure water is 32.018°F ($T_0$) and 4.58 Torr ($P_0$) and the S-L-V three phase point of sea water (point 5) is 28.3 °F and 3.87 Torr. As water becomes separated from an aqueous solution during a vacuum freezing operation, the triple point temperature and pressure values gradually decrease. Thus, if sea water is processed to achieve a 33% recovery of fresh water, the triple point of the final solution (point 7) is 26.4 °F and 3.53 Torr. In the following discussions, the triple point and the vaporization line of sea water are respectively represented by the point 5 and the line 5-6 and the triple point and the vaporization line of the more concentrated sea water (33% recovery) are respectively represented by the point 7 and the line 7-8.

In an ideal operation, the conditions prevailing within a vacuum freezer corresponds to the triple point of the solution in the freezer. Accordingly, in case of a back-mix freezer the prevailing condition correspond to the triple point of the discharge solution. However, in a multistage freezer, the conditions vary from stage to stage from the triple point of feed solution to that of the discharge solution. When sea water is ideally processed in a back-mix type vacuum freezer

with 33% recovery, the temperature $T_f$ and pressure $(P_L)_1$ prevailing in the freezer (point 7) are respectively 26.4 $^oF$ and 3.53 Torr. The water vapour formed in practice is at a pressure slightly lower than this ideal freezer pressure and such vapour desublimes at pressure $(P_L)_2$ and Temperature $T_2$. This desublimation point is shown at 10 in Figure 2. $\Delta T_F$, defined as $T_f - T_2$, and $\Delta P_F$, defined as $(P_L)_1 - (P_L)_2$ may be regarded as the driving forces required for conducting the vacuum freezing operation. In a sea water desalination operation with 30% recovery, $T_2$ and $(P_L)_2$ are respectively about 25 $^oF$ and 3.3 Torr.

The ratio of the ice formation rate to the vapour formation rate is dependent upon the ratio of the latent heat of vaporization to the latent heat of fusion at the triple point. Typically these values are 1070 Btu/lb and 144 Btu/lb, respectively. Hence, approximately 7.5 pounds of ice are formed for every pound of vapour.

However, when a pool of aqueous solution is subjected to a low pressure, an evaporative freezing operation takes place only within a thin top layer. An evaporative freezing operation is prevented from taking place in the lower regions of the pool because of the hydraulic pressure applied to it. Accordingly, there are two ways of conducting this step. Firstly, the liquid can be sprayed into the space and the other is to use a plurality of shallow freezer trays.

2. Ice Washing Operation

A slurry of ice crystals and mother liquor is produced in a vacuum freezing operation. Ice particles formed during the freezing of an aqueous solution consist of practically pure water while the solute accumulates in the unsolidified liquid phase or brine. Before the ice crystals can be melted, they must be separated from the brine. The brine adheres to the ice crystals by means of interfacial tension (which is about 20 - 30 dynes/cm). Since the ice crystals produced in the evaporative freezing operation are rather small, the total area of ice exposed to the brine is large and these surface tension forces are of major importance. Conventional methods used

for the separation of crystals from their mother-liquor prove to suffer from being either too slow or too expensive for use in the production of fresh water from sea water. To overcome the difficulties associated with these surface tension forces, a displacement process can be used in which the brine is displaced from the interstices of the ice crystals by a second liquid which has a surface tension equal, or substantially equal, to that of the brine. In a water conversion process, the clean product water can serve as the displacing liquid.

A counterwasher used by the Colt Industries, and which can be used in the present process, is a vertical column provided with screens midway between the top and bottom of the column. In operation, an ice-brine slurry enters at the bottom of the column. The ice particles are carried upwardly by the stream of brine and, in the upper region of the column, the ice crystals consolidate into a porous plug. This plug is moved continuously upward by maintaining a pressure difference across the plug. Excess brine drains back through the screens. Wash water, under pressure, is introduced at the top of the column. The velocity of the water down the column with respect to the upward velocity of the ice plug is so selected that it just compensates for the dispersion of the fresh water-brine interface. The purified ice is collected at the top of the column, reslurrified with water or a water insoluble liquid and then subjected to a high pressure melting operation.

3. Vapour Desublimation and High Pressure Ice-Melting

Referring back to Figure 1, it will be seen that Step 3 consists of two operations which take place simultaneously. These two operations are respectively a high pressure ice melting operation which is effected in one zone (Zone 2) and a low pressure vapour desublimation operation which is effected in another zone (Zone 3). Zone 2 is a zone confined within high pressure-resistant thermally-conductive walls and Zone 3 is the neighbouring zone which surrounds the heat-conducting walls. The two zones are in a heat exchange relationship with one another. Zone 2 may be subjected to a high pressure and Zone 3 to a low pressure. A quantity of the ice-liquid slurry formed in Step 2

is introduced into Zone 2 and the low pressure water vapour formed in Step 1 is introduced into Zone 3 at a low pressure $(P_L)_2$. Zone 2 is then subjected to a sufficiently high pressure $(P_H)_1$ such that the melting temperature of ice $T_1$ is lower than the desublimation temperature $T_2$ of the low pressure water vapour. The conditions of the desubliming water vapour and the ice melting under high pressure are denoted by points 10 and 9 respectively in Figure 2. The simultaneous desublimation of vapour and the melting of the ice are illustrated by Figure 3. The figure shows that ice crystals 12 within a conduit or tube 11 forming Zone 2 are melted under the high pressure $(P_H)_1$ at a temperature $T_1$ which is lower than the desublimation temperature $T_2$ of the low pressure water vapour. The ice 12 therefore becomes water 13, and the water vapour 14 is converted into a layer of desublimate (ice) 15 on the outer surface of the conduit or tube 11.

Referring to Figure 2, the melting temperature $T_1$ of the ice under high pressure and the ideal freezer temperature $T_f$ are related by the following equation:-

$$T_1 = T_f - \Delta T_F - \Delta T_M ,$$

wherein the $\Delta T_F$ and $\Delta T_M$ are temperature driving forces required in Steps 1 and 3 respectively. Knowing the melting temperature $T_1$ at the appropriate high temperature the pressure which needs to be applied can be ascertained from a melting curve for ice. The melting point/pressure relationship of water is available from Dorsey, N.E., "Properties of Ordinary Water -- -- Substance" American Chemical Society Monograph Series No. 81, P. 612, Reinhold Publishing Corp. (1940). According to this reference, the melting points of water at pressures of 2000 psia, 4000 psia, 6000 psia, 8000 psia and 10,000 psia are 30°F, 28°F, 26°F, 23.7°F and 21.5°F respectively. If the brine in the freezer is 5.0 % NaCl solution ($T_f$ = 26.7°F), and $\Delta T_F$ and $\Delta T_M$ are 2 °F, $T_1$ is 21.7 °F and $(P_H)_1$ is 8800 psi (600 atm.).

The heat released in the desublimation step is utilized in the melting of ice under high pressure since Zones 2 and 3 are in thermal communication with one another. Accordingly, the amount of ice melted and the amount of vapour desublimed are in the ratio of the latent heat of sublimation to the latent heat of fusion. This is approximately 8.5 to 1. Since, as explained hereinbefore, only 7.5 pounds of ice is formed for each pound of water vapour formed in Step 1, the purified ice from Step 2 does not provide sufficient heat removal capacity for desubliming all of the water vapour in Step 3. Accordingly, there is a need to add one more pound of ice to Zone 2 to provide an adequate heat removal capacity for desubliming one pound of water vapour. Once the process is under way, this additional amount of ice is formed in Zone 2 *in situ* during Step 4. To summarize, melting of both the purified ice from Step 2 and the ice formed in Zone 2 during Step 4 provides a substantially adequate heat removal capacity for desubliming water vapour during Step 3. Even utilizing this approach, there is still a need for auxiliary refrigeration to compensate for heat leakages, work inputs made to the system and for maintaining the processing system in a thermally balanced state.

The overall resistance to heat transfer in this step comprises the resistance on the melting side of the conduit wall and the resistance on the desublimation side. The desublimation side resistance is small, because the desublimate layer only grows slowly and the desublimate (ice) layer has a high thermal conductivity. It is noted that only one pound of desublimate is deposited as 1144 Btu of heat is transferred and that thermal conductivity of ice is $5.7 \times 10^{-3}$ cal/(sec.)(sq. cm)($^{o}$C/cm). This is about 4.42 times that of water. The ultimate heat sinks on the melting side are the ice-water interfaces. Therefore, heat must pass from points on the inside wall to the nearby ice-water interfaces. The melting side resistance can be maintained at a low value by ensuring a substantial amount of ice is maintained in the zone during the melting operation. It will be noted that 7.5 lbs of water

are produced from the process as 1144 Btu of heat. Accordingly, the amount of heat transferred during this step to produce one pound of fresh water is 152.5 Btu.

4. In-Situ Desublimate Dissolution in Zone 3 and Exchange Ice Formation in Zone 2

Again referring back to Figure 1, it will be seen that Step 4 consists of two component operations which take place simultaneously. These two operations are, respectively, an in-situ dissolution of the desublimate into a dissolving solution (Solution B) in Zone 3 and an exchange ice formation in Zone 2 under a low pressure. On dissolving the desublimate, the dissolving solution is diluted and becomes what will be referred to as Solution C. Figure 4 schematically illustrates the normal pressure phase diagram of the binary system of the dissolving solution. The freezing point of water ($T_3$) is denoted by 16, the saturated liquid in equilibrium with ice is denoted by line 16-17 and the eutectic line at normal pressure by 17-18. The equilibrium conditions under which Solution B and Solution C co-exist with ice are respectively represented by points 19 and 20. The temperature range $T_4$ between the points 19 and 20 lies below the freezing temperature of water $T_3$.

Figures 5a, 5b and 5c illustrate schematically the progress of the operations carried out in Step 4. Figure 5a illustrates the conditions inside (Zone 2) and outside (Zone 3) of a thermally conductive conduit 21 at the beginning of Step 4 operations. It will be seen that water 23 is located in the conduit (Zone 2) and a desublimate layer 22 is present at the exterior of the conduit (Zone 3). The pressure inside the conduit in Zone 2 is then reduced to a low pressure $(P_L)_3$ and a quantity of dissolving solution is brought into contact with the desublimate in Zone 3 under a low pressure $(P_L)_4$. Since the equilibrium temperature of ice-solution in Zone 3 is lower than the equilibrium temperature of ice-water in Zone 2, heat transfers from inside the conduit to the exterior thereof and the following exchange crystallization operation takes place:

(water in Zone 2) + (ice and Solution B in Zone 3) ⟶
(water and ice in Zone 2) + (Solution C in Zone 3)

Figure 5b illustrates an intermediate state during the Step 4 operations. It will be seen that the desublimate layer 24 has become thinner and a layer of ice 25 has been formed inside the conduit. Figure 5c illustrates the final condition when Step 4 has been completed. The desublimate layer has been removed substantially completely and a substantially equal amount of ice 26 has been formed inside the conduit. A thin ice layer may be deliberately maintained outside the conduit at the conclusion of Step 4 operations in order to facilitate desublimate depositinn in the following Step 3 operation.

Any suitable aqueous solution as the dissolving solution may be used. However, as aforementioned, it is particularly convenient to use either a quantity of the feed solution or a quantity of the concentrate obtained in Step 2. The $\Delta t$ available for heat transfer in Step 4 is greater in the latter case than in the former case and, in consequence, the time taken to carry out Step 4 will be less in the latter case. However, the process steps in the former case are somewhat simpler than in the latter case.

The time taken to effect this step is comparatively short, because the amount of heat to be transferred is small, the overall heat transfer coefficient is high and a substantial $\Delta t$ is available for heat transfer. These criteria may be explained as follows:

(1) Since 7.5 lbs of fresh water are produced per pound of desublimate formed, the amount of heat to be transferred in producing one pound of water is only equal to, approximately, 144/7.5 = 19.2 Btu.

(2) It can be seen from Figure 5b that there are layers of ice both on the interior and exterior surfaces of the conduit. Heat released at the ice-water interface inside the conduit is transmitted through the internal ice layer, the metal wall and the external ice layer to be finally released at the ice-brine interface externally of the conduit. This supplies the heat of dissolution. Having two ice layers adhering to the walls is very advantageous from the standpoint

of heat transfer, because ice has a high thermal conductivity. The thermal conductivity of ice ($k_{ice}$) is $5.7 \times 10^{-3}$ gr-cal/(sec)($cm^2$)($^oC$/cm) and that of water ($k_w$) is $1.29 \times 10^{-3}$ in the same units. When the total thickness of the two layers of ice is less than 1 mm, the overall heat transfer coefficient is greater than 450 Btu/hr-$ft^2$$^oF$.

(3) With reference to sea water desalination with 33 % recovery, assuming that the feed water is used as the dissolving solution, its concentration changes only from 3.5 % salt to about 3.3 %. The brine concentration at the ice-brine interface is approximately 3 % and the ice-brine interface temperature is around 29 $^oF$. The temperature difference between the ice-water interface inside and outside the conduits is approximately 3 $^oF$. When the concentrate obtained in Step 2 is used as the dissolving solution, this temperature difference may increase to approximately 5 $^oF$.

Although the basic process has now been described, other steps may be taken to maintain or improve the results obtained thereby. Thus, heat exchange and air venting are important considerations. The incoming feed solution is therefore cooled in counter-current heat exchangers by the outgoing concentrated solution and product water. In order to reduce work input in the process, it is necessary to produce efficient heat exchange operations so that the terminal temperature difference is very small. The presence of an inert gas in the system affects both the evaporative freezing operation and the desublimation operation. Accordingly, an efficient air venting step is highly desirable.

As has already been described, the purified ice obtained in Step 2 may be mixed with a liquid such as water to re-form a slurry and the resulting ice slurry is introduced into the thermally conductive conduits at the outset of Step 3. During the high pressure ice melting operation, a liquid such as water must be pumped into the zone located in the interior of the conduits so as to compensate for the volume shrinkage associated with an ice-melting operation and so as to keep the zone

pressurized. This can be effected by utilizing a high pressure liquid pump.

An apparatus in which Steps 1, 3 and 4 described hereinbefore can be effected is shown in Figure 6. Basically, such apparatus is a freezer-melter and comprises an insulated outer shell 27, a demister 28 which separates the interior of the shell into a lower region 29 which is used as an evaporative freezing zone (Zone 1) and an upper region 30. A vacuum conduit 31 connects the region 30 to a vacuum pump. A reservoir is provided for the solution 32 to be treated. A freezer agitator 33 which is capable of dispersing the solution into an evacuated space in the lower region is also provided. In the upper region 30, a plurality of compartmentalised zones 34, 35, 36, 37 having valve means 38 and 39 associated therewith are provided. In the compartmentalised zones, high pressure thermally conductive conduits are located. Finally, externally of the zones 34, 35, 36, 37, auxiliary cooling coils 42 are provided, through which a cooling medium 43, 44 is passed. The thermally conductive conduits define Zones 2 and 3 referred to hereinbefore. The interior of the conduits constitute the high pressure ice-melting zone 40 (Zone 2) and the exterior thereof constitutes the low pressure vapour desublimation zone 41 (Zone 3).

Step 1 described hereinbefore is effected in region 29 (Zone 1) and the high pressure ice-melting operation and the vapour desublimation operation of Step 3 are effected respectively in regions 40 and 41 (Zone 2 and Zone 3 respectively) of the apparatus. In Zone 1, the freezer agitator 33 is used to spray the aqueous solution into space to increase the rates of vaporization and freezing thereof. The demister 28 prevents liquid droplets entrained in the vapour from entering the desublimation zone 41. Since the interior of the apparatus is maintained at a temperature lower than the ambient temperature and there are work inputs to the unit, there is a need for an auxiliary cooling to maintain the system in a thermally balanced state. Refrigerant coils 42 for such auxiliary cooling are shown above the conduits.

It can be seen that the high pressure tube region is compartmentalised at 34, 35, 36, 37 and that each compartment is provided with louvre-type valve means 38, 39. Step 3 and Step 4 operations are conducted alternately in each compartment. While a Step 3 operation is being effected in a compartment, the valve means 38, 39 of that compartment are open to admit low pressure vapour into the compartment. An ice slurry is admitted to the conduits and the conduits are pressurized. When a Step 4 operation is being effected in a compartment, the valve means of the compartment are closed to pressure isolate the space 41 externally of the conduits, that is to say, Zone 3 both from the evaporative freezing zone and the evacuating conduit. The conduits (Zone 2) are depressurized and a quantity of dissolving solution (Solution B) is introduced into the space externally of the conduits. The desublimate is dissolved in the dissolving solution to become a Solution C and a mass of ice almost equal to that of the dissolved desublimate is formed inside the conduits. At the conclusion of Step 4, Solution C is removed from the compartment and the valve means are opened to permit the initiation of further Step 3 operations. If a quantity of the feed solution is used as the dissolving solution, Solution C is formed as diluted feed solution and may be returned directly to the liquid reservoir in the evaporative freezing zone. Both the ice formed in Zone 2 during Step 4 and the ice in the ice slurry from Step 2 are melted by the high pressure ice-melting operation during Step 3.

In addition to desalination of sea and brackish water and in the separation of aqueous solutions from industrial sources, the apparatus and process of the present invention may be used for conditioning sludges and hydrophilic colloids to facilitate dehydration operations. It is well known that when a sludge or a hydrophilic colloid is substantially completely frozen and re-melted, water can be separated from the conditioned sludge or colloid by simple filtration. In such an application, the vacuum freezing step is so effected that the mass discharged from the freezer is substantially completely frozen which is then made into a slurry, transferred into thermally conductive

conduits and melted by the high pressure ice-melting operation. There is, in such a case, no need for an ice washing step.

CLAIMS

1. A process for separating at least one component from an aqueous mixture by subjecting the mixture to freezing and melting operations, the process comprising a first step of simultaneously flash vaporizing and freezing the aqueous mixture in a first zone under reduced pressure to form water vapour at low pressure and a further component which at least partially comprises a mass of ice; a second step of simultaneously melting the mass of ice derived from the first step in a second zone located internally of a thermally conductive conduit and desubliming the low pressure water vapour formed in the first step in a third zone located externally of the heat conductive conduit so as to form simultaneously, a melt phase in the second zone and a desublimate in the third zone, said second and third zones being in heat exchange relationship with one another, said second step being effected by admitting the low pressure water vapour from the first zone into the third zone at a pressure lower than the triple point pressure of water, and maintaining the ice under a pressure which is sufficiently high to ensure that the melting temperature of the ice is lower than the desublimation temperature of water vapour, the heat released in the desublimation of the vapour being utilized in the melting of the ice, and a third step of simultaneously dissolving the desublimate in a dissolving solution in the third zone and solidifying water in the second zone to thereby form a further solution and ice in the two zones respectively, said third step being effected by pressure isolating the third zone from the first zone, bringing a quantity of the dissolving solution into contact with the desublimate in the third zone, and reducing the pressure in the second zone so that the temperature of freezing in the second zone is higher than the dissolution temperature in the third zone, the heat released in the freezing of water in the second zone being utilized to supply the heat required to dissolve the desublimate in the third zone.

2. A process as claimed in claim 1 wherein the ice formed in the third step is recycled and re-subjected to the second and third steps.

3. A process as claimed in claim 1 or 2 wherein the first step is effected in such a manner that part of the aqueous mixture remains unfrozen so that an ice-mother liquor mixture is formed, the ice-mother liquor mixture then being separated to form a mass of purified ice and a concentrate, the separated ice then being utilized as part of the ice to be melted in the second step of high pressure ice-melting.

4. A process as claimed in any one of claims 1 to 3, wherein the dissolving solution is the feed solution itself.

5. A process as claimed in claim 4, wherein the further solution obtained in the third step is recycled to the first step for further treatment.

6. A process as claim in claim 3, wherein the concentrate is recycled for use as the dissolving solution in the third step.

7. A process as claimed in any preceding claim wherein the aqueous mixture is pre-cooled and deaerated prior to being subjected to the first step.

8. An apparatus for separating at least one component from an aqueous mixture comprising an enclosure capable of withstanding the formation of a vacuum in its interior, said enclosure defining, in its interior, a first zone in which an aqueous mixture is subjectable to simultaneous flash vaporization and freezing under a reduced pressure to thereby form water vapour at low pressure and a mass of ice, at least one compartment being formed in the interior of the enclosure externally of the first zone, a plurality of high pressure thermally conductive conduits or tubes being provided in each compartment so as to define a second zone in the conduits or tubes in which ice is alternately melted under a high pressure and formed under a low pressure, and a third zone externally of said conduits or tubes but within said compartment in which, alternately low pressure water vapour is desublimed and the desublimate is dissolved, valve means being provided in each compartment which, in a first position, permit the admittance of low pressure vapour from the first zone into the compartment and, in a second position, isolate the compartment from the first zone, the valve means being open and the tubes being pressurized whilst a vapour desublimation and high pressure ice

melting are simultaneously effected in the third and second zones of a compartment, the valve means being closed and the tubes being depressurized whilst a desublimate dissolution and ice formation are simultaneously effected inthe third and second zones of a compartment respectively.

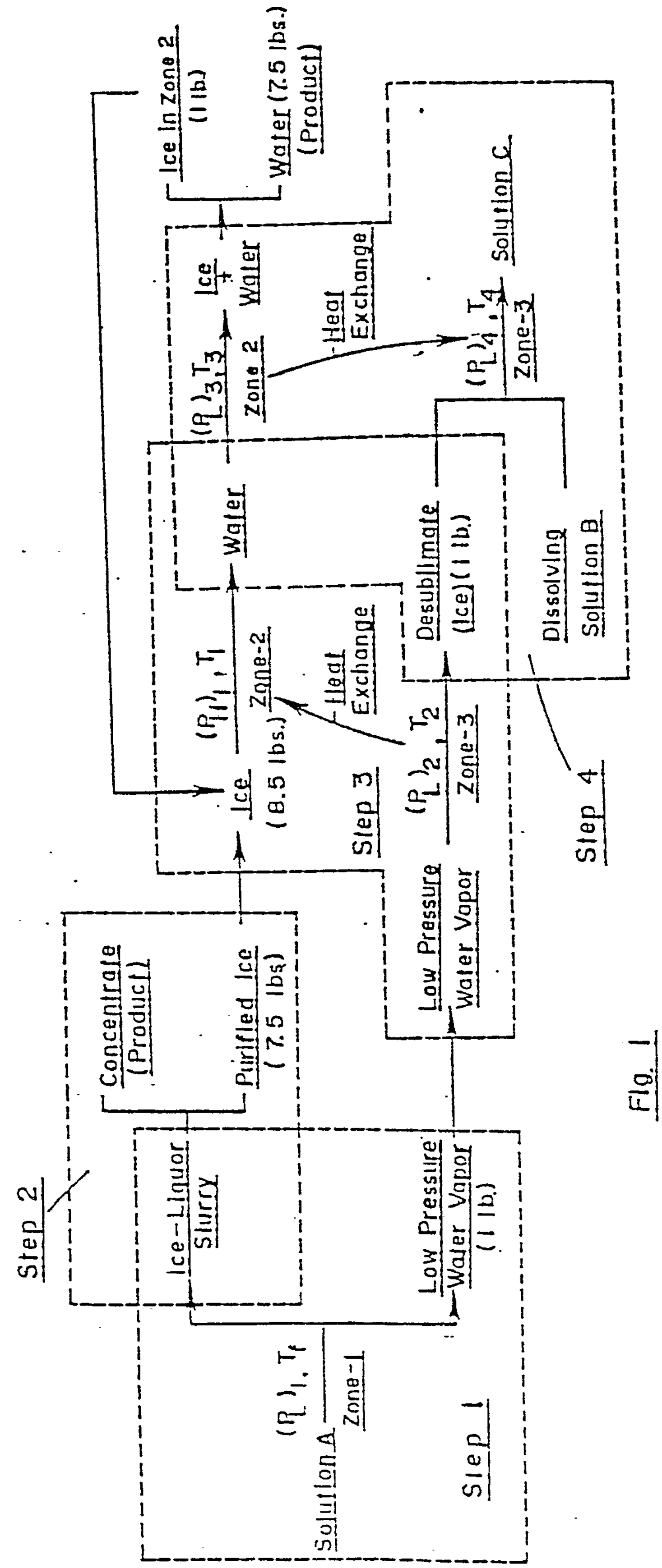


Fig. 1

Drawing 1

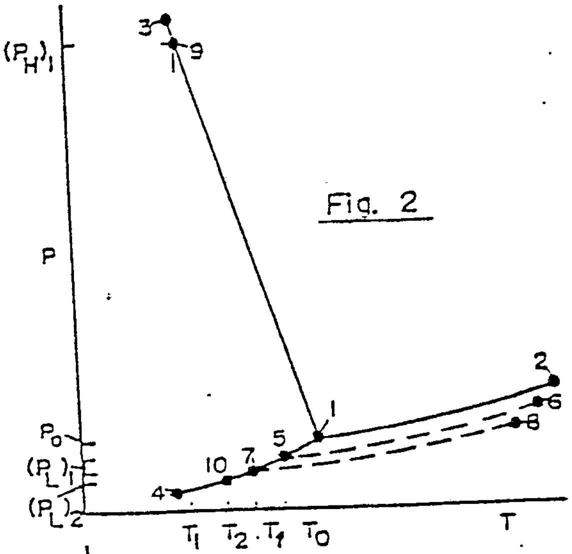


Fig. 2

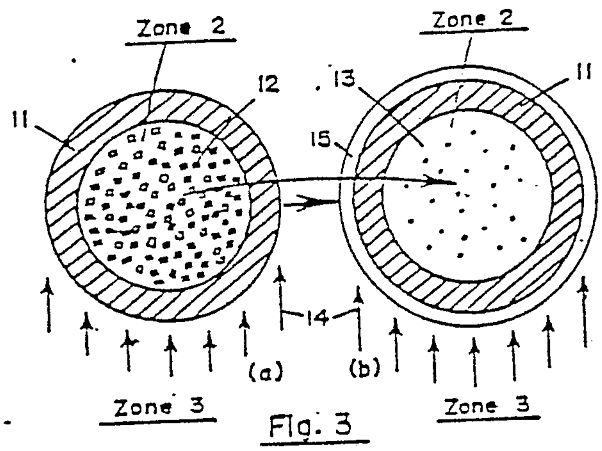


Fig. 3

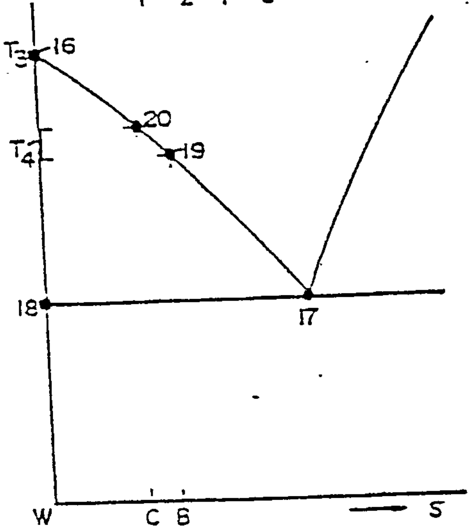


Fig. 4

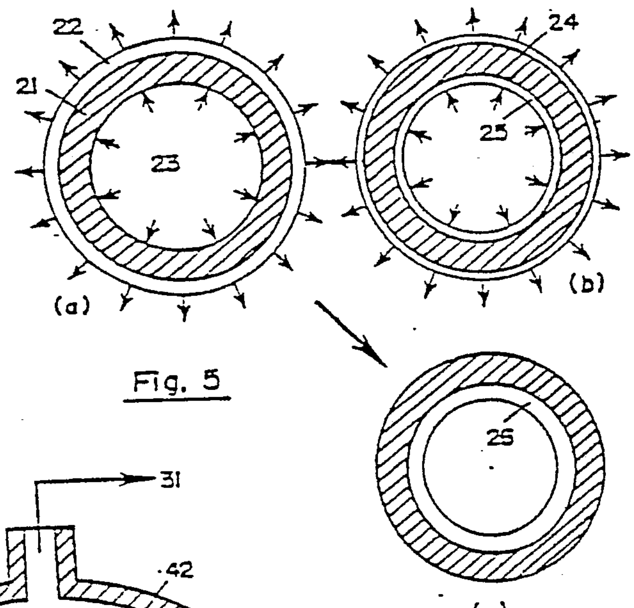


Fig. 5

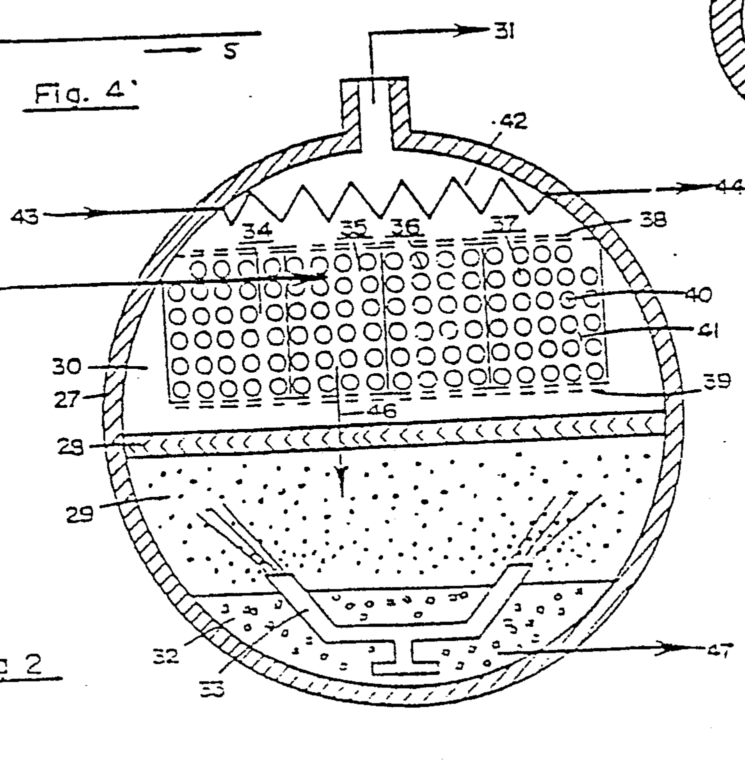


Fig. 6

Drawing 2

0015157

European Patent Office

# EUROPEAN SEARCH REPORT

Application number

EP 80 30 0533

## DOCUMENTS CONSIDERED TO BE RELEVANT

| Category | Citation of document with indication, where appropriate, of relevant passages | Relevant to claim |
|---|---|---|
| D | US - A - 3 690 116 (CHEN-YEN CHENG et al. )<br>* Complete document *<br>-- | 1,3,<br>7,8 |
| A | DE - B - 1 292 635 (K. FISCHBECK) | |
| A | AU - A - 429 575 (M.L. GOLDBERG) | |
| A | US - A - 4 003 213 (R.C. COX)<br>---- | |

CLASSIFICATION OF THE APPLICATION (Int. Cl. )

C 02 F 1/22
B 01 D 9/04

TECHNICAL FIELDS SEARCHED (Int.Cl. )

C 02 F 1/22
B 01 D 9/04

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

✓ The present search report has been drawn up for all claims

| Place of search | Date of completion of the search | Examiner |
|---|---|---|
| The Hague | 04-06-1980 | V. AKOLEYEN |

EPO Form 1503.1 06.78